(19) Europäisches Patentamt
European Patent Office
Office européen des brevets

(11) **EP 4 290 466 A1**

(12) **DEMANDE DE BREVET EUROPEEN**

(43) Date de publication:
**13.12.2023   Bulletin 2023/50**

(21) Numéro de dépôt: **22305830.6**

(22) Date de dépôt: **08.06.2022**

(51) Classification Internationale des Brevets (IPC):
**G06T 17/00** (2006.01)      **G06T 7/579** (2017.01)

(52) Classification Coopérative des Brevets (CPC):
**G06T 7/579; G06T 17/00;** G06T 2207/10016;
G06T 2207/30041; G06T 2210/41

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(71) Demandeurs:
• **Universite Brest Bretagne Occidentale
29200 Brest (FR)**
• **Institut National de la Santé et de la Recherche
Médicale
75013 Paris (FR)**

(72) Inventeurs:
• **QUELLEC, Gwenolé
29200 BREST (FR)**
• **LAMARD, Mathieu
29820 GUILERS (FR)**
• **BRAHIM, Ikram
29200 BREST (FR)**

(74) Mandataire: **LLR
11, boulevard de Sébastopol
75001 Paris (FR)**

(54)   **PROCÉDÉ DE MODÉLISATION D'UNE STRUCTURE ANATOMIQUE DU CORPS HUMAIN**

(57)   L'invention concerne un procédé de modélisation d'une structure anatomique du corps humain en trois dimensions mise en œuvre par ordinateur et comprenant les étapes suivantes :
- Obtention de plusieurs images consécutives de la structure anatomique à l'aide d'un dispositif de prise d'images en mouvement et portant une source de lumière,
- Identification de sous-structures anatomiques de la structure anatomique dans les images obtenues,
- Réalisation d'une modélisation en trois dimensions de la structure anatomique à partir des images obtenues,

- Comparaison de la forme en trois dimensions des sous-structures anatomiques des images obtenues avec des modèles de sous-structures anatomiques stockés sur une base de données,

l'étape de réalisation (6) d'une modélisation en trois dimensions de la structure anatomique à partir des images obtenues comprenant une prédiction de la profondeur de la structure anatomique ainsi qu'une prédiction du déplacement du dispositif de prise d'images.

Fig.1

EP 4 290 466 A1

**Description**

L'invention concerne les procédés et dispositifs d'imagerie de structures anatomiques du corps humain et plus particulièrement les procédés et dispositifs permettant une modélisation en trois dimensions de telles structures.

La réalisation de modèles en trois dimensions de structures anatomiques pour le diagnostic de différentes pathologies est de plus en plus réalisée pour pouvoir diagnostiquer lesdites pathologies avec précision. Nous allons par la suite prendre l'exemple du diagnostic de la sécheresse oculaire pouvant être causée entre autres choses par le tabagisme, le port de lentilles de contact, la maladie de Parkinson, le lupus ou encore la polyarthrite rhumatoïde.

Les médecins ont une faible précision et une faible reproductibilité pour quantifier l'œil sec, ce qui complique l'évaluation des traitements et leur prescription. Il peut s'agir, pour la quantification de l'œil sec, d'un examen à l'aide d'une lampe à fente. L'ophtalmologiste peut par exemple déposer préalablement sur la cornée un produit de contraste puis observe plusieurs signes de sécheresse. Tout d'abord, il mesure le temps que met le film lacrymal pour se déchirer suite à un clignement d'œil, un temps court indiquant un film fin. Ensuite, il détecte les zones de la surface oculaire endommagées par la sécheresse. Ces zones se présentent sous la forme de points, de tâches ou de filaments : en fonction de leur nombre et de leur localisation, un degré de sécheresse oculaire peut être déterminé. Des colorants peuvent également être utilisés pour mettre en évidence des lésions oculaires de la sclérotique et de la cornée. Le problème de ces mesures est qu'elles sont peu précises et peu reproductibles. Ces limitations empêchent une quantification fiable de l'évolution de la sécheresse oculaire chez un patient. En particulier, elles ne permettent pas de mesurer l'effet d'un traitement de manière satisfaisante.

Il existe également d'autres méthodes de diagnostic, consistant à se passer de l'examen par lampe à fente afin de diagnostiquer l'œil sec : des appareils dédiés, basés sur différents principes d'imagerie, par exemple par meibographie, sont mis au point. La lampe à fente, dont chaque ophtalmologiste est équipé, doit alors être remplacé par un nouvel appareil.

Dans tous les cas de figures (pour un examen oculaire ou tout autre type d'examen), une vidéo est acquise (par lampe à fente, endoscope ou encore par un microscope chirurgical). Des principes d'egomotion (liés au mouvement tridimensionnel d'une caméra par rapport à son environnement) sont mis en œuvre pour la réalisation de modèles en trois dimensions à partir de vidéos acquises par un appareil d'imagerie tels que ceux précités. Néanmoins, ces méthodes posent un problème lié au fait que les procédés mis en œuvre violent un principe fondateur des techniques de détermination de structure basée sur un mouvement (ou « *Structure from Motion* » en anglais), à savoir que deux structures correspondantes dans deux images consécutives d'une vidéo auront la même couleur et la même intensité. Or dans les images susmentionnées, l'éclairage est lié à la caméra, et non à la scène, ce qui invalide l'hypothèse (les résultats des procédés énoncés ci-dessus dépendent fortement de la lumière et des ombres d'une scène analysée). De plus, des erreurs de modélisation peuvent apparaître en fonction des cas de modélisation.

L'invention a notamment pour but de fournir un procédé de modélisation d'une structure anatomique du corps humain permettant de réaliser des modélisations en trois dimensions plus fiables et de manière plus répétable que les solutions proposées dans l'art antérieur.

A cet effet, l'invention a pour objet un procédé de modélisation d'une structure anatomique du corps humain en trois dimensions mise en œuvre par ordinateur et comprenant les étapes suivantes :

- Obtention de plusieurs images consécutives de la structure anatomique à l'aide d'un dispositif de prise d'images en mouvement et portant une source de lumière, la source de lumière étant configurée pour éclairer la structure anatomique,
- Identification de sous-structures anatomiques de la structure anatomique dans les images obtenues,
- Réalisation d'une modélisation en trois dimensions de la structure anatomique à partir des images obtenues,
- Comparaison de la forme en trois dimensions des sous-structures anatomiques des images obtenues avec des modèles de sous-structures anatomiques stockés sur une base de données,

l'étape de réalisation d'une modélisation en trois dimensions de la structure anatomique à partir des images obtenues comprenant une prédiction de la profondeur de la structure anatomique ainsi qu'une prédiction du déplacement du dispositif de prise d'images.

Ainsi, on obtient un procédé de modélisation de type « Structure from Motion » (mouvement du dispositif de prises d'images) en trois dimensions de structures anatomiques du corps humain comprenant tout d'abord une étape de segmentation sémantique des images captées en sous-structures d'intérêt avec vérification de la cohérence de ces sous-structures avec des sous-structures d'une base de données et qui représentent, en termes de forme, le type de sous-structures devant être observées. Cela permet de corriger une éventuelle erreur de modélisation par comparaison avec des structures connues et éprouvées. Ces techniques dites de « 3-D shape matching » (ou correspondances de formes en tris dimensions) permettent de réaliser une modélisation fiable et répétable.

En somme, on utilise la connaissance préalable des sous-structures devant être observées au niveau d'une structure d'intérêt et une hypothèse dérivée du fait que la source de lumière est portée par le dispositif de prise d'images pour modéliser de manière fiable et répétable une structure anatomique en trois dimensions. On obtient dès lors une image avec une très bonne résolution, au champ large et sans artéfact d'illumination.

Suivant d'autres caractéristiques optionnelles du procédé de modélisation prises seules ou en combinaison :

- l'étape d'obtention de plusieurs images consécutives de la structure anatomique comprend l'enregistrement d'une vidéo suivi d'un découpage de cette vidéo en plusieurs images consécutives ;
- le procédé de modélisation est un procédé auto-supervisé ;
- le procédé de modélisation comprend une étape d'alimentation d'une intelligence artificielle en modèles de sous-structures stockés sur une base de données ;
- la modélisation est réalisée en temps réel ;
- l'étape de réalisation d'une modélisation en trois dimensions de la structure anatomique à partir des images est une modélisation des sous-structures anatomiques identifiées ;
- l'étape de comparaison de la forme en trois dimensions des sous-structures anatomiques des images obtenues avec des modèles de sous-structures anatomiques stockés sur une base de données comprend l'utilisation des fonctions de perte suivantes : perte de reconstruction sémantique et perte d'ajustement de sphère, et de préférence la perte photométrique, la perte de similarité de structures ainsi que le lissage de la profondeur ;
- le procédé de modélisation est un procédé de modélisation en trois dimensions d'un œil ; et
- les sous-structures anatomiques sont la cornée et la sclère.

L'invention concerne également un programme d'ordinateur comprenant des instructions qui, lorsque le programme est exécuté par un ordinateur, conduisent celui-ci à mettre en œuvre les étapes du procédé selon l'invention.

L'invention concerne également un support d'enregistrement lisible par ordinateur comprenant des instructions qui, lorsqu'elles sont exécutées par un ordinateur, conduisent celui-ci à mettre en œuvre les étapes du procédé selon l'invention.

L'invention a également pour objet un procédé de détection d'une pathologie issu de l'observation d'une structure du corps humain comprenant :

- Un procédé de modélisation selon l'invention, et
- Une étape de diagnostic d'une pathologie sur la base de la modélisation effectuée.

L'invention a également pour objet un dispositif de modélisation d'une structure anatomique du corps humain en trois dimensions pour la mise en œuvre d'un procédé selon l'invention et comprenant :

- un dispositif de prise d'images en mouvement et portant une source de lumière,
- des moyens de réalisation d'une modélisation en trois dimensions de la structure anatomique à partir des images obtenues,
- des moyens d'identification de sous-structures anatomiques de la structure anatomique dans les images obtenues, et
- des moyens de comparaison de la forme en trois dimensions des sous-structures anatomiques des images obtenues avec les modèles de sous-structures stockés sur une base de données.

De préférence, le dispositif de prise d'images est formé par une caméra configurée pour enregistrer une vidéo.

**Brève description des figures**

L'invention sera mieux comprise à la lecture de la description qui va suivre donnée uniquement à titre d'exemple et faite en se référant aux dessins annexés dans lesquels :

La figure 1 est une représentation schématique du procédé selon l'invention, et
La figure 2 est une représentation d'une modélisation selon l'invention.

**Description détaillée**

Nous allons maintenant décrire un procédé de modélisation selon l'invention étape par étape. Dans la description suivante, l'exemple d'une modélisation en trois dimensions d'un œil servira d'exemple pour illustrer les différentes étapes. Comme expliqué plus haut, le procédé et le dispositif de modélisation peuvent être mis en œuvre pour des modélisation d'autres structures anatomiques du corps humain. Nous allons également décrire dans cette partie un procédé auto-supervisé, avantageux dans notre cas. On rappelle ici qu'un procédé auto-supervisé est une méthode d'apprentissage automatique reposant sur un réseau de neurones conçu pour ingérer des données non étiquetées.

Le procédé décrit ici est de préférence réalisé en temps réel.

La première étape 2 consiste à obtenir plusieurs images consécutives de la structure anatomique à l'aide d'un dispositif de prise d'images en mouvement et portant une source de lumière configurée pour éclairer la structure anatomique. Le dispositif de prise d'images peut être porté par une lampe à fente, un endoscope, etc. La source de lumière peut être de toute sorte connue permettant d'éclairer les structures anatomiques à modéliser. Ces moyens connus ne seront pas détaillés dans la présente demande. Le mouvement de la caméra implique la mise en œuvre d'un procédé dit de « Structure from Motion » comme expliqué plus haut.

Le dispositif de prise d'image peut être une caméra vidéo. Il pourrait également s'agir d'un appareil prenant des clichés alternativement à une vidéo. Les vidéos peuvent par exemple être enregistrées, dans le cas d'un examen oculaire, à l'aide d'une lampe à fente Haag Streit BQ 900 et du module caméra CM 900 (résolution 1600×1200, 12 images par secondes). Le grossissement peut être réglé sur ×10 et la surface oculaire analysée après illumination avec de la lumière blanche, suivie d'une lumière bleue de cobalt et de l'interposition d'un filtre jaune.

Dans le cas d'une vidéo, une étape de découpage en plusieurs images de la vidéo est réalisée. Il peut par exemple s'agir de séquences de trois images avec un intervalle de dix images entre chaque séquence (cela peut par exemple être le cas pour une caméra à 12 images par secondes).

Les images sélectionnées sont par la suite traitées pour prédire la segmentation sémantique de chacune d'entre elles (étape 4). Pour se faire, un réseau de segmentation formé sur la base d'un modèle de type « Feature Pyramid Network » (ou « Réseau pyramidal de caractéristiques » en français) peut être utilisé (utilisé pour la détection d'objets) pour prédire cette segmentation sémantique de la structure anatomique à modéliser en sous-structures d'intérêt, par étiquetage des pixels appartenant à une sous-structure anatomique ou à une autre. Ces dernières peuvent par exemple être, dans le cas de l'œil, la cornée et la sclère. D'autres structures peuvent être délibérément non retenues car source de problèmes de modélisation. Pour se faire, chaque pixel dans les classes suivantes peuvent être classés : paupière, sclère, cornée. Tous les pixels étiquetés « paupière » sont ignorés dans l'apprentissage et l'inférence, car ils ne contiennent aucune information utile pour la modélisation (la paupière se déplace également par rapport au globe oculaire, ce qui va à l'encontre de l'hypothèse qui sous-tend le modèle décrit et ne peut être modélisée par un modèle de forme rigide (sphérique).

L'étape suivante 6 consiste à réaliser une modélisation en trois dimensions de la structure anatomique à partir des images. Cette prédiction peut être réalisée par l'utilisation de deux réseaux neuronaux convolutifs (dans le cas d'un procédé auto-supervisé) qui peuvent être utilisés pour prédire la profondeur (réseau neuronal convolutif DepthNet) et le déplacement du dispositif de prise d'images, ou egomotion (réseau neuronal convolutif EgomotionNet). Les architectures DepthNet et EgomotionNet utilisées sont celles proposées dans le document « Casser, V., Pirk, S., Mahjourian, R., & Angelova, A. (2019). Unsupervised monocular depth and ego-motion learning with structure and semantics. In Proceedings of the IEEE/CVF Conférence on Computer Vision and Pattern Recognition Workshops (pp. 0-0) ».

Le réseau neuronal convolutif DepthNet permet d'obtenir, par une architecture d'encodeur-décodeur entièrement convolutive, une carte de profondeur dense à partir d'une seule image Rouge-Vert-Bleu. Il peut être représenté par l'équation suivante :

$$D_i = \theta(I_i), \theta : \mathbb{R}^{(H \times W \times 3)} \rightarrow \mathbb{R}^{(H \times W)}$$

,

dans laquelle $I_i$ est l'image à l'instant i, $D_i$ est la carte de profondeur associée à l'image, H est la hauteur de l'image, et W est la largeur de l'image.

Le réseau neuronal convolutif EgomotionNet prend par exemple trois images consécutives et prédit des transformations simultanément. Les deux réseaux neuronaux sont utilisés pour l'inférence et l'entraînement de l'intelligence artificielle dans le cadre d'un procédé auto-supervisé. Cette modélisation permet de visualiser d'éventuels zones endommagés à la surface de l'œil. Il peut être représenté par les équations suivantes :

$$\psi_E(I_{i-n}, I_i) = (t_{x_1}, t_{y_1}, t_{z_1}, r_{x_1}, r_{y_1}, r_{z_1})$$

, et

$$\psi_E(I_i, I_{i+n}) = (t_{x_2}, t_{y_2}, t_{z_2}, r_{x_2}, r_{y_2}, r_{z_2})$$

.

dans lesquelles $I_i$ est l'image à l'instant i, $I_{i+n}$ est l'image à l'instant i+n, , t est la translation dans les direction x, y, z, et r est la rotation dans les direction x, y, z.

Plusieurs fonctions de perte sont prises en compte pour la réalisation d'une modélisation en trois dimensions précise et reproductible. Ces dernières permettent la mise en œuvre de l'étape 8 de comparaison de la forme en trois dimensions des sous-structures anatomiques des images obtenues avec des modèles de sous-structures stockés sur une base de données.

La première et principale d'entre elles est la perte de reconstruction sémantique (ou « semantic reconstruction loss », SRL) qui est le principal signal de supervision. Elle peut être représentée par l'équation suivante :

$$\mathcal{L}_{SRL} = min(\|\hat{S}_{i \to j} - S_j\|)$$

,

dans laquelle $S_j$ est la segmentation de l'image j, et $S_{i \to j}$ est la segmentation de l'image i recalée sur la segmentation de l'image j.

La seconde est la perte photométrique (ou « photometric loss », recon), est similaire à la perte de reconstruction sémantique à l'exception que les images sont utilisées comme point d'entrée pour comparer une image reconstruite avec l'image suivante. Elle peut être représentée par l'équation suivante :

$$\mathcal{L}_{recon} = min(\|\hat{I}_{i \to j} - I_j\|)$$

,

dans laquelle $I_j$ est l'mage j, et $I_{i \to j}$ est l'image i recalée sur l'image j.

La troisième est la perte de similarité de structure (ou « structural similarity loss », SSIM), mise en œuvre pour comparer la luminance, le contraste et la structure entre une image reconstruite et l'image suivante. Elle peut être représentée par les équations suivantes :

$$\mathcal{L}_{SSIM} = 1 - SSIM(i,j)$$

,

$$SSIM(i,j) = \frac{(2\mu_i\mu_j + l_1)(2\sigma_{ij} + l_2)}{(\mu_i^2 + \mu_j^2 + l_1)(\sigma_i^2 + \sigma_j^2 + l_2)}$$

dans laquelle $\mu_i$, $\mu_j$ sont la moyenne , $\sigma_i^2$, $\sigma_j^2$ la variance, et $\sigma_{ij}$ la covariance de x,y, L est la gamme dynamique des valeurs de pixel, $k_1 = 0.01$, et $k_2 = 0.03$.

La quatrième est le lissage de la profondeur (ou « depth smoothness », DS) qui encourage le lissage en pénalisant la discontinuité de profondeur si l'image présente une continuité dans la même zone.

Elle peut être représentée par les équations suivantes :

$$\mathcal{L}_{DS} = |\nabla_x D_i|e^{-\nabla_x I_i} + |\nabla_y D_i|e^{-\nabla_y I_i}$$

,

dans laquelle $I_i$ est l'mage i ,$D_i$ est la carte de profondeur associée à l'image $I_i$, $\nabla x$, $\nabla y$ sont les gradients de l'image $I_i$ dans la direction horizontale et verticale.

Une des principales, formant en particulier l'étape de comparaison de la forme en trois dimensions des sous-structures anatomiques des images obtenues avec des modèles de sous-structures stockés sur une base de données, est la perte d'ajustement de sphères (ou « sphere fitting loss »). Dans le cas d'un examen oculaire, cette dernière est mise en œuvre pour ce que l'on estime être la forme de l'oeil : deux sphères qui se croisent. Une sphère antérieure plus petite représente la cornée et une sphère postérieure représentant la sclère. Afin d'implémenter cette perte, nous estimons d'abord une cartographie de profondeur, puis en utilisant la segmentation sémantique il est possible la sphéricité des deux régions : cornée et sclère. On peut également appliquer un seuil sur la surface avant de calculer cette perte pour s'assurer que les deux sous-structures anatomiques sont présentes. Une fois qu'une image correspond au seuil, il est possible d'utiliser les estimations de profondeur pour la cornée ou la sclère de de convertir cela en une projection de nuage de points en trois dimensions en utilisant l'inverse de la matrice intrinsèque. Il est ensuite possible d'utiliser un nuage de points estimé et d'appliquer un ajustement de sphère par la méthode des moindres carrés. Il est ensuite possible de déterminer le meilleur centre de sphère pour les points de données donnés.

En réarrangeant les termes de l'équation suivante :

$$(x - x_0)^2 + (y - y_0)^2 + (z - z_0)^2 = r^2$$
.

dans laquelle x,y,z sont des points de l'espace, $x_0$, $y_0$, $z_0$ sont les coordonnées du centre de la sphère, et r est le rayon de la sphère,

il est possible d'exprimer l'équation en notation matricielle et résoudre l'équation suivante pour le terme $\vec{c}$ :

$$\vec{f} = A\vec{c}$$

Dans laquelle :

$$\vec{f} = \begin{bmatrix} x_k^2 + y_k^2 + z_k^2 \\ x_{k+1}^2 + y_{k+1}^2 + z_{k+1}^2 \\ \vdots \\ x_n^2 + y_n^2 + z_n^2 \end{bmatrix} A = \begin{bmatrix} 2x_k & 2y_k & 2z_k & 1 \\ 2x_{k+1} & 2y_{k+1} & 2z_{k+1} & 1 \\ \vdots & \vdots & \vdots & \vdots \\ 2x_n & 2y_n & 2z_n & 1 \end{bmatrix} \vec{c} = \begin{bmatrix} x_0 \\ y_0 \\ z_0 \\ r^2 - x_0^2 - y_0^2 - z_0^2 \end{bmatrix}$$

dans laquelle $x_k, y_k, z_k$ est l'un des points de données, $x_0$, $y_0$, $z_0$ les coordonnées du centre de la sphère, r est le rayon de la sphère.

En ajustant les n points de données $x_k$, $y_k$, $z_k$, il est possible de résoudre les coordonnées du centre de la sphère $x_0$, $y_0$, $z_0$ et le rayon r.

La perte d'ajustement de sphère est une erreur quadratique moyenne entre la sphère ajustée et les points de données. La sphéricité pour chacune des régions cornéenne et sclérale ont une pondération $\alpha_e$. Avec les deux régions ajustées à une sphère, il est possible de calculer ensuite la perte pour chaque pixel p. Les équations correspondantes sont les suivantes :

$$\mathcal{L}_{SFL} = \mathcal{L}_{cornea_{SFL}} + \mathcal{L}_{sclera_{SFL}}$$

$$\mathcal{L}_{cornea_{SFL}} = \frac{1}{p_c} \sum_{k=1}^{p_c} ((x_{ck} - x_{c0}) - r_c)^2, \mathcal{L}_{sclera_{SFL}} = \frac{1}{p_s} \sum_{k=1}^{p_s} ((x_{sk} - x_{s0}) - r_s)^2$$

dans lesquelles $p_c$ est le nombre de pixels sur la surface cornéenne et $p_s$ celui sur la surface sclérale, $x_{ck}$ les points de données sur la cornée , $x_{c0}$ les coordonnées du centre de la cornée, $x_{sk}$ les points de données sur la sclère , $x_{s0\ les}$ coordonnées du centre de la sphère de la sclère.

L'ensemble des fonctions de perte ci-dessus sont utilisées pour obtenir une modélisation en utilisant un opérateur de déformation d'image différentiable prenant en compte une image Rouge-Vert-Bleu $\hat{I}_i$, une cartographie de profondeur $D_j$, et une egomotion $E_{i\to j}$, permettant d'obtenir une image reconstruite $\hat{I}_j^{th}$. Cela est modélisé par l'équation suivante :

$$\mathcal{L}_{total} = \alpha_a \mathcal{L}_{SRL} + \alpha_b \mathcal{L}_{recon} + \alpha_c \mathcal{L}_{SSIM} + \alpha_d \mathcal{L}_{DS} + \alpha_e \mathcal{L}_{SFL}$$

La base de données mentionnée plus haut peut être comprise dans des moyens de stockage locaux ou déportés.

L'objectif de l'étape de de comparaison de la forme en trois dimensions des sous-structures anatomiques des images obtenues avec des modèles de sous-structures stockés sur une base de données est de vérifier que la modélisation en trois dimensions réalisées plus haut est conforme, au niveau des formes générales des sous-structures d'intérêt, à une réalité physique correspondant aux modèles stockés sur la base de données. Dans le cas d'un procédé auto-supervisé, il s'agit d'alimenter une intelligence artificielle avec des données connues et robustes avec entraînement.

Exemple de réalisation

Après une prise d'images et une segmentation sémantique à l'aide des dispositifs (caméra vidéo) et réseaux (« Feature Pyramid Network ») décrits plus haut, les données sont traitées à l'aide des réseaux neuronaux convolutifs décrits plus haut et des différentes fonctions de perte afin de réaliser une modélisation en trois dimensions, ici d'un œil humain.

Une première étape a consisté, dans le cadre de cet exemple, à annoter manuellement des points correspondants à des zones endommagées à la surface de l'œil, et les veines visibles de la sclère. Pour visualiser la précision des prédictions réalisées (segmentation sémantique, profondeur, egomotion), une image source a été transformée en une image cible et les points marqués ont été suivis. En utilisant l'équation

$$p_s \sim K\hat{T}_{t \to s}\hat{D}_t(p_t)K^{-1}p_t,$$

dans laquelle $p_s$ correspond aux pixels de l'image source, $p_t$ correspond aux pixels de l'image cible (*target*), $D_{t}$ correspond à la carte de profondeur de l'image cible, $T_{t \to s}$ est la matrice de transformation, $K$ la matrice intrinsèque , et $K^{-1}$ l'inverse de la matrice intrinsèque.

les pixels $p_s$ du cadre source sont projetés sur le cadre cible $p_t$. L'évaluation réalisée a utilisé la déformation inverse qui nécessite d'abord la prédiction de la carte de profondeur $D_t$ de l'image cible, et ensuite l'egomotion de la source à la cible qui donne aussi la matrice de transformation $T_{t \to s}$. La métrique d'évaluation a été implémentée sur un ensemble de test de 3 patients avec 54 images. Le jeu de test est constitué de 126 points sur la sclère sur des intersections de veines et points de ponctuation, 33 points sur la cornée de points de ponctuation visibles.

La base de référence (ou méthode de référence selon l'art antérieur) utilisée pour la comparaison a dû être entraînée par intervalles en raison de la perte divergente à l'infini, ainsi que de l'irréversibilité de la matrice d'egomotion prédite.

La base de référence a été entraînée en utilisant un taux d'apprentissage de 0,0002, une taille de lot de 8, une pondération SSIM de 0,15, une pondération de reconstruction L1 de 0,85, et un lissage de la profondeur de 0,04. La configuration de formation selon l'invention utilise un taux d'apprentissage de 0,0002, une taille de lot de 8, une pondération SSIM de 0,15, une pondération de reconstruction L1 de 0,15, une pondération de reconstruction sémantique L2 de 0,04, une pondération d'ajustement de sphère 10000 et un poids de lissage de profondeur de 0,04 [3].

Tous les modèles ont été entraînés jusqu'à 200 époques (hyperparamètre de la descente de gradient qui contrôle le nombre de passages complets dans l'ensemble de données d'apprentissage), le meilleur modèle (perte la plus faible obtenue) étant conservé pour l'inférence.

Le tableau 1 ci-dessous montre les résultats de l'évaluation de notre ensemble de test par différentes méthodes. En définissant les deux nouvelles fonctions de pertes (ajustement de sphère et segmentation sémantique), il est possible de stabiliser la formation et d'éviter que les pertes ne divergent. On obtient également de meilleurs résultats comme indiqué ci-dessous. Malgré l'augmentation des calculs pendant la formation via les fonctions de pertes, le temps d'inférence reste similaire à celui de la base de référence. Dans les expériences suivantes, nous avons prétraité les données en utilisant un pas de trame n = 10 (y compris l'expérience de base).

Nous avons comparé trois configurations différentes selon l'invention :

« SiGMoid n°3 » dans laquelle seule la segmentation sémantique est utilisée,

« SiGMoid n°4 » dans laquelle la segmentation sémantique et l'ajustement de sphère ont été utilisés, et

« SiGMoid n°5 » avec un autre réseau neuronal convolutif utilisé.

| No. | Method | CNN Inputs | Frame step | $\mathcal{L}_{SRL}$ | $\mathcal{L}_{SFL}$ | Mean Euclidian (px) | Mean Euclidan (%) |
|-----|--------|-----------|-----------|------|------|-----|-----|
| 1 | Casser [4]* | A | No | - | - | 29.08 | 1.82 |
| 2 | Casser [4]* | A | Yes | - | - | 27.19 | 1.70 |

(suite)

| No. | Method | CNN Inputs | Frame step | $\mathcal{L}_{SRL}$ | $\mathcal{L}_{SFL}$ | Mean Euclidian (px) | Mean Euclidan (%) |
|-----|--------|------------|------------|---------|---------|---------------------|-------------------|
| 3 | SiGMoid | A | Yes | Yes | No | 22.48 | 1.40 |
| 4 | SiGMoid | A | Yes | Yes | Yes | **7.7** | **0.48** |
| 5 | SiGMoid | B | Yes | Yes | Yes | 15.16 | 0.95 |

Le tableau ci-dessus représente les résultats obtenus à l'aide de cinq méthodes : les trois décrites ci-dessus et deux méthodes selon l'art anérieur. La distance euclidienne moyenne en pixels est la plus faible dans le SiGMoid n°4. La méthode selon l'invention mettant en œuvre une segmentation sémantique, les réseaux neuronaux convolutifs décrits ci-dessus ainsi que les deux fonctions de perte additionnées atteint l'erreur la plus faible par rapport à la ligne de base. Cette modélisation plus précise et plus robuste permet dès lors un meilleur diagnostic d'une pathologie par un médecin.

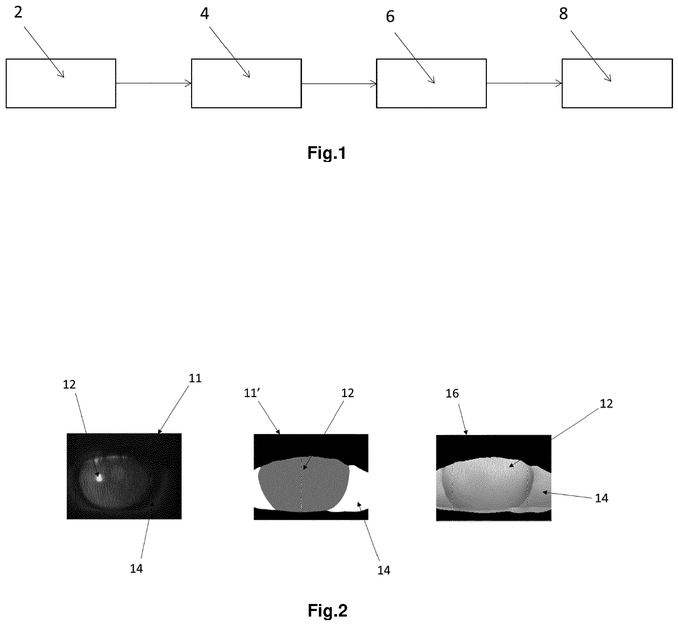

La figure 2 illustre une image 11 d'un œil humain, une représentation d'une segmentation sémantique 11' de cet œil en deux sous-structures anatomiques qui sont la cornée 12 et la sclère 14, et une modélisation 16 de l'œil par utilisation de la méthode « SiGMoid n°4 ».

Le dispositif de modélisation d'une structure anatomique du corps humain en trois dimensions comprend, comme listés ci-dessus :

Un dispositif de prise d'images en mouvement et portant une source de lumière. Un exemple non limitatif (et ayant servi pour la réalisation de l'exemple ci-dessus) a été détaillé plus haut ;
Des moyens de réalisation d'une modélisation en trois dimensions de la structure anatomique à partir des images obtenues ;
Des moyens d'identification de sous-structures anatomiques de la structure anatomique dans les images obtenues ; et
Des moyens de comparaison de la forme en trois dimensions des sous-structures anatomiques des images obtenues avec les modèles de sous-structures stockés sur une base de données.

Les différents moyens permettant la modélisation, les identifications et les comparaisons ci-dessus peuvent être formés par une unité de commande électronique comprenant une mémoire non volatile stockant les différents programmes de contrôle prédéterminés et potentiellement la base de données comprenant des modèles robustes. Ces moyens incluent, entre autres, des moyens informatiques conventionnels, ou moyens de calcul informatique conventionnels, tels que des processeurs, des mémoires vives et dures. Ces moyens exécutent les instructions de programmes d'ordinateurs, c'est-à-dire des codes exécutables, enregistrés sur des supports lisibles par ordinateur.

L'invention n'est pas limitée aux modes de réalisation présentés et d'autres modes de réalisation apparaîtront clairement à l'homme du métier. Comme expliqué plus haut, le procédé de modélisation peut être mis en œuvre pour modéliser des structures anatomiques autres que l'œil. De plus, les moyens techniques décrits pour la prise d'images ou le traitement des informations pourront différer de ceux décrits.

**Liste de références**

2 : étape d'obtention de plusieurs images consécutives de la structure anatomique à l'aide d'un dispositif de prise d'images en mouvement et portant une source de lumière
4 : étape d'identification de sous-structures anatomiques de la structure anatomique dans les images obtenues
6 : étape réalisation d'une modélisation en trois dimensions de la structure anatomique à partir des images obtenues
8 : étape de comparaison de la forme en trois dimensions des sous-structures anatomiques des images obtenues avec des modèles de sous-structures stockés sur une base de données
11 : image
11' : segmentation sémantique
12 : cornée
14 : sclère
16 : modélisation

**Revendications**

1. Procédé de modélisation d'une structure anatomique du corps humain en trois dimensions mise en œuvre par ordinateur et **caractérisé en ce qu'**il comprend les étapes suivantes :

   - Obtention (2) de plusieurs images consécutives de la structure anatomique à l'aide d'un dispositif de prise d'images en mouvement et portant une source de lumière, la source de lumière étant configurée pour éclairer la structure anatomique,
   - Identification (4) de sous-structures anatomiques de la structure anatomique dans les images obtenues,
   - Réalisation (6) d'une modélisation en trois dimensions de la structure anatomique à partir des images obtenues,
   - Comparaison (8) de la forme en trois dimensions des sous-structures anatomiques des images obtenues avec des modèles de sous-structures anatomiques stockés sur une base de données,

   l'étape de réalisation (6) d'une modélisation en trois dimensions de la structure anatomique à partir des images obtenues comprenant une prédiction de la profondeur de la structure anatomique ainsi qu'une prédiction du déplacement du dispositif de prise d'images.

2. Procédé de modélisation selon la revendication 1, dans lequel l'étape d'obtention (2) de plusieurs images consécutives de la structure anatomique comprend l'enregistrement d'une vidéo suivi d'un découpage de cette vidéo en plusieurs images consécutives.

3. Procédé de modélisation selon l'une quelconque des revendications précédentes, le procédé de modélisation étant un procédé auto-supervisé.

4. Procédé de modélisation selon la revendication précédente, comprenant une étape d'alimentation d'une intelligence artificielle en modèles de sous-structures stockés sur une base de données.

5. Procédé de modélisation selon l'une quelconque des revendications précédentes, la modélisation étant réalisée en temps réel.

6. Procédé de modélisation selon l'une quelconque des revendications précédentes, dans lequel l'étape de réalisation (6) d'une modélisation en trois dimensions de la structure anatomique à partir des images est une modélisation des sous-structures anatomiques identifiées.

7. Procédé de modélisation selon l'une quelconque des revendications précédentes, dans lequel l'étape de comparaison (8) de la forme en trois dimensions des sous-structures anatomiques des images obtenues avec des modèles de sous-structures anatomiques stockés sur une base de données comprend l'utilisation des fonctions de perte suivantes : perte de reconstruction sémantique et perte d'ajustement de sphère, et de préférence la perte photométrique, la perte de similarité de structures ainsi que le lissage de la profondeur.

8. Procédé de modélisation selon l'une quelconque des revendications précédentes, le procédé étant un procédé de modélisation en trois dimensions d'un œil.

9. Procédé de modélisation selon la revendication précédente, dans lequel les sous-structures anatomiques sont la cornée et la sclère.

10. Programme d'ordinateur comprenant des instructions qui, lorsque le programme est exécuté par un ordinateur, conduisent celui-ci à mettre en œuvre les étapes du procédé selon l'une quelconque des revendications précédentes.

11. Support d'enregistrement lisible par ordinateur comprenant des instructions qui, lorsqu'elles sont exécutées par un ordinateur, conduisent celui-ci à mettre en œuvre les étapes du procédé selon l'une quelconque des revendications 1 à 9.

12. Procédé de détection d'une pathologie issue de l'observation d'une structure du corps humain comprenant :

   - Un procédé de modélisation selon l'une quelconque des revendications 1 à 9, et
   - Une étape de diagnostic d'une pathologie sur la base de la modélisation effectuée.

**13.** Dispositif de modélisation d'une structure anatomique du corps humain en trois dimensions pour la mise en œuvre d'un procédé selon l'une quelconque des revendications 1 à 9 et **caractérisé en ce qu'**il comprend

- Un dispositif de prise d'images en mouvement et portant une source de lumière,
- Des moyens de réalisation d'une modélisation en trois dimensions de la structure anatomique à partir des images obtenues,
- Des moyens d'identification de sous-structures anatomiques de la structure anatomique dans les images obtenues, et
- Des moyens de comparaison de la forme en trois dimensions des sous-structures anatomiques des images obtenues avec les modèles de sous-structures stockés sur une base de données.

**14.** Dispositif de modélisation selon la revendication précédente, dans lequel le dispositif de prise d'images est formé par une caméra configurée pour enregistrer une vidéo

**Fig.1**

**Fig.2**

Europäisches
Patentamt

European
Patent Office

Office européen
des brevets

# RAPPORT DE RECHERCHE EUROPEENNE

Numéro de la demande

EP 22 30 5830

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | PASCAL BÉRARD ET AL: "High-quality capture of eyes", ACM TRANSACTIONS ON GRAPHICS, ACM, NY, US, vol. 33, no. 6, 19 novembre 2014 (2014-11-19), pages 1-12, XP058060868, ISSN: 0730-0301, DOI: 10.1145/2661229.2661285 * abrégé * * figures 3,12 * * page 3 – page 7 * * page 9 – page 10 * * page 11, colonne 2 * ----- | 1-14 | INV. G06T17/00 G06T7/579 |
| A | DAN WITZNER HANSEN ET AL: "In the Eye of the Beholder: A Survey of Models for Eyes and Gaze", IEEE TRANSACTIONS ON PATTERN ANALYSIS AND MACHINE INTELLIGENCE, IEEE COMPUTER SOCIETY, USA, vol. 32, no. 3, 31 mars 2010 (2010-03-31), pages 478-500, XP011280658, ISSN: 0162-8828, DOI: 10.1109/TPAMI.2009.30 * le document en entier * ----- | 1-14 | |
| A | ZOLLHÖFER M ET AL: "State of the Art on Monocular 3D Face Reconstruction, Tracking, and Applications", COMPUTER GRAPHICS FORUM : JOURNAL OF THE EUROPEAN ASSOCIATION FOR COMPUTER GRAPHICS, WILEY-BLACKWELL, OXFORD, vol. 37, no. 2, 22 mai 2018 (2018-05-22), pages 523-550, XP071546197, ISSN: 0167-7055, DOI: 10.1111/CGF.13382 * le document en entier * ----- | 1-14 | DOMAINES TECHNIQUES RECHERCHES (IPC) G06T |

-/--

Le présent rapport a été établi pour toutes les revendications

| Lieu de la recherche | Date d'achèvement de la recherche | Examinateur |
|---|---|---|
| Munich | 9 décembre 2022 | Millet, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Europäisches Patentamt**
**European Patent Office**
**Office européen des brevets**

# RAPPORT DE RECHERCHE EUROPEENNE

Numéro de la demande

EP 22 30 5830

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| T | BRAHIM IKRAM ET AL: "Mapping the Ocular Surface from Monocular Videos with an Application to Dry Eye Disease Grading", 15 septembre 2022 (2022-09-15), PATTERN RECOGNITION : 5TH ASIAN CONFERENCE, ACPR 2019, AUCKLAND, NEW ZEALAND, NOVEMBER 26-29, 2019, REVISED SELECTED PAPERS, PART II; [LECTURE NOTES IN COMPUTER SCIENCE], PAGE(S) 63 - 72, XP047633152, ISSN: 0302-9743 ISBN: 978-3-030-41298-2 * le document en entier * ----- | | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 9 décembre 2022 | Millet, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 2 de 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CASSER, V. ; PIRK, S. ; MAHJOURIAN, R. ; ANGELOVA, A.** Unsupervised monocular depth and ego-motion learning with structure and semantics. *Proceedings of the IEEE/CVF Conférence on Computer Vision and Pattern Recognition Workshops,* 2019, 0-0